# FASCICULE DE BREVET EUROPEEN

(11) **EP 3 476 729 B1**
(45) Date de publication et mention de la délivrance du brevet: **18.12.2019**
(21) Numéro de dépôt: 18173740.4
(22) Date de dépôt: 23.05.2018
(51) Int. Cl.: B64C 27/00

(54) **PROCEDE ET DISPOSITIF D'OPTIMISATION DE PUISSANCE DANS UNE INSTALLATION MOTRICE**
VERFAHREN UND VORRICHTUNG ZUR LEISTUNGSOPTIMIERUNG IN EINER MOTORANLAGE
METHOD AND DEVICE FOR POWER OPTIMISATION IN A POWER PLANT

(30) Priorité: 26.10.2017 FR 1771126
(43) Date de publication de la demande: 01.05.2019
(73) Titulaire: Airbus Helicopters, 13725 Marignane Cedex (FR)
(72) Inventeur: GENEIX, Jérôme, 13140 Miramas (FR); BARAIS, Olivier, 13820 Ensues La Redonne (FR)
(74) Mandataire: GPI & Associés

(56) Documents cités:
- EP-A2- 1 602 845
- FR-A1- 2 871 138
- US-A1- 2013 264 412

## Description

La présente invention concerne un procédé et un dispositif d'optimisation de puissance dans une installation motrice.

Le projet menant à cette demande de brevet a reçu un financement du programme de recherche et d'innovation Horizon 2020 de l'Union européenne, dans le cadre de la convention de subvention CleanSky 2 N° « GAM-FRC-2014-001 Issue E ».

En particulier, l'invention se rapporte à un giravion muni d'une installation motrice comprenant au moins un moteur.

Par exemple, un hélicoptère multimoteur comporte au moins deux moteurs mettant en mouvement une boîte de transmission de puissance. Cette boîte de transmission de puissance met alors en mouvement au moins un rotor principal qui participe au moins partiellement à la sustentation et à la propulsion de l'hélicoptère. La boîte de transmission de puissance peut aussi engendrer la rotation d'un rotor auxiliaire participant au contrôle du mouvement en lacet de l'hélicoptère.

De plus, la boîte de transmission de puissance met en mouvement de multiples accessoires tels qu'une pompe, un alternateur, un ventilateur mécanique qui participe à la ventilation du compartiment logeant la boîte de transmission de puissance...

Hors cas de panne, les moteurs fonctionnent en mettant en œuvre des régimes normaux de fonctionnement, tel que le régime de décollage et le régime de puissance maximale continu.

Lors de la panne d'un moteur entraînant son arrêt, la puissance maximale transmise à la boîte de transmission de puissance et donc la puissance disponible pour entraîner les rotors sont de fait réduites. Les moteurs restant en fonctionnement peuvent alors fonctionner selon des régimes d'urgence leur permettant de fournir une puissance accrue au regard des régimes normaux, afin de limiter l'impact de la perte de puissance résultant de la panne le temps d'atteindre des conditions de vol nécessitant moins de puissance. Lorsque ces régimes d'urgence sont mis en œuvre, l'installation motrice doit être révisée.

A titre illustratif, un hélicoptère peut perdre de l'altitude suite à la panne d'un moteur. Le pilote sollicite alors les moteurs restant en fonctionnement en appliquant les régimes d'urgence pour soit poser l'aéronef soit piloter l'aéronef dans des conditions de fonctionnement minimisant la puissance requise par les rotors.

Les missions pouvant être réalisées par un tel hélicoptère sont dimensionnées en fonction de la puissance restant disponible suite à la panne d'un moteur entraînant son arrêt. Par exemple, la masse de la charge portée par l'hélicoptère et/ou le rayon d'action de l'hélicoptère sont fonction de cette puissance.

Les documents EP 1602845 et EP 0059627 sont éloignés de la problématique de gestion de puissance sur un giravion multimoteur en cas de panne d'un moteur entraînant son arrêt.

Le document EP1602845 décrit un générateur muni d'un arbre d'entraînement. Cet arbre d'entraînement possède une zone fusible susceptible de rompre dès que l'arbre d'entraînement est soumis à un couple dépassant un seuil. Dès lors, le générateur présente un doigt qui est maintenu dans une position désengagée par un mélange eutectique durant des conditions de fonctionnement normales. En cas d'échauffement du générateur, le mélange fond et libère le doigt. Ce doigt tend alors à augmenter le couple subi par l'arbre d'entraînement pour obtenir la rupture de la zone fusible afin de protéger le générateur. Cet enseignement est éloigné de l'invention.

Le document EP 0059627 décrit un dispositif pour séparer un équipement, tel qu'un alternateur, d'un moyen d'entraînement, tel qu'un moteur, notamment pour protéger l'équipement. La séparation est obtenue à l'aide d'un couteau qui frotte contre une zone fusible d'un arbre d'entraînement pour provoquer son échauffement.

Le document FR 2905673 est éloigné de l'invention en étant relatif à un système de climatisation.

Le document US 2016/061.053 est éloigné de l'invention en étant relatif à un procédé de commande d'une installation motrice dans des conditions transitoires. Durant ces conditions transitoires, un moteur est accéléré ou ralenti par un organe électrique extérieur au moteur.

Le document FR 2425380 est aussi éloigné de l'invention en étant relatif à un procédé durant lequel des volets sont déplacés suite à un mauvais fonctionnement d'un moteur sur un avion à deux moteurs. Ce procédé consiste à modifier les sorties de volets pour modifier la dissymétrie de poussée des moteurs.

Les documents US 2013/264412 et FR 2871138 sont aussi connus.

La présente invention a alors pour objet de proposer un dispositif et un procédé d'optimisation de puissance au sein d'un giravion notamment suite à une panne rendant inopérant un moteur.

L'invention concerne ainsi un giravion muni d'au moins un moteur, ce giravion comprenant une boîte de transmission de puissance mise en mouvement par ledit au moins un moteur, ce giravion comprenant au moins un rotor mis en rotation par la boîte de transmission de puissance, le rotor étant un organe aérodynamique participant au moins à la sustentation ou à la propulsion ou au contrôle du mouvement en lacet du giravion, le giravion comprenant au moins un accessoire qui n'est pas un dit organe aérodynamique, le giravion comprenant une liaison mécanique liant mécaniquement la boîte de transmission de puissance et ledit au moins un accessoire, la boîte de transmission de puissance mettant en mouvement l'accessoire via la liaison mécanique, la liaison mécanique comprenant au moins un arbre d'entraînement connecté à la boîte de transmission de puissance.

Ce giravion comporte un dispositif d'optimisation de puissance, ledit dispositif d'optimisation de puissance comprenant un dispositif de déconnexion par déconnexion dudit arbre d'entraînement de la boîte de transmission de puissance, le dispositif de déconnexion étant commandé par un calculateur de commande, le calculateur de commande étant configuré pour activer le dispositif de déconnexion pour déconnecter ledit arbre d'entraînement lorsque ledit au moins un moteur est inutilisable, par exemple suite à une panne. Une telle panne rendant le moteur inutilisable peut être une panne moteur, un incident ou une panne annexe telle qu'une panne d'un circuit de carburant ou une casse mécanique entre le moteur et le rotor par exemple.

L'expression « organe aérodynamique participant au moins à la sustentation ou à la propulsion ou au contrôle du mouvement en lacet du giravion » signifie qu'un organe aérodynamique participe à la sustentation et/ou à la propulsion et/ou au contrôle du mouvement en lacet du giravion.

L'expression « organe aérodynamique » désigne ainsi un rotor, une hélice..

Le terme « accessoire » désigne un organe non aérodynamique, à savoir un organe qui n'est notamment ni un rotor ni une hélice, et donc un organe susceptible d'être arrêté en vol sans mettre en péril le giravion.

L'expression « arbre d'entraînement connecté à la boîte de transmission de puissance » signifie que l'arbre d'entraînement est mis en mouvement dans des conditions normales par la boîte de transmission de puissance. A cet effet, l'arbre d'entrainement peut être fixé directement à la boîte de transmission de puissance, ou peut être relié indirectement à la boîte de transmission de puissance via au moins un organe, tel qu'n arbre, une bride..

Lors de la détection qu'un moteur est devenu inutilisable, les autres moteurs d'un aéronef multimoteur peuvent fonctionner dans un régime de secours de manière usuelle. Sur un giravion monomoteur, une procédure d'autorotation est initiée.

De plus, le dispositif de déconnexion est automatiquement déclenché pour déconnecter l'arbre d'entraînement de la boîte de transmission de puissance. Ce dispositif de déconnexion peut alors être fonctionnellement agencé en parallèle de la transmission de puissance de la boîte de transmission de puissance vers l'accessoire. Suite à la déconnexion de l'arbre d'entraînement, la boîte de transmission de puissance est toujours en mouvement mais n'entraine plus l'accessoire.

Sur un giravion multimoteur la puissance disponible pour entraîner les rotors est de fait augmentée de la puissance consommée initialement par l'accessoire. Le dispositif d'optimisation de puissance permet ainsi de fournir une puissance accrue aux rotors en coupant la liaison vers un ou plusieurs accessoires consommateurs de puissance en cas de panne rendant inutilisable un moteur. Le dispositif d'optimisation de puissance de l'invention ne permet pas d'optimiser la puissance délivrée par les moteurs restant éventuellement en fonctionnement, mais permet d'optimiser son utilisation en la dédiant autant que possible à l'entraînement des rotors. Ce dispositif d'optimisation de puissance ne surveille en outre absolument pas l'accessoire, mais surveille étonnamment le fonctionnement du ou des moteurs pour déconnecter un arbre d'entraînement sans rapport avec ce ou ces moteurs.

L'augmentation de la puissance disponible pour les rotors au moment d'une panne rendant inutilisable un moteur peut alors éventuellement se traduire par la possible augmentation du nombre de passagers et/ou du rayon d'action du giravion et/ou de la masse du fret embarqué.

A titre d'exemple utilisé pour illustrer l'invention, un gain de puissance de 40kW peut être obtenu pour entraîner les rotors d'un hélicoptère suite à la déconnexion d'un accessoire. Ce gain peut permettre au giravion de décoller avec une charge augmentée d'environ 150kg en mission CAT A (catégorie A). La masse du dispositif d'optimisation de puissance installé peut être de l'ordre du centième de la masse décollable supplémentaire ce qui justifie son intérêt.

Sur un giravion monomoteur, cette architecture peut tendre à ne pas dissiper inutilement l'énergie cinétique emmagasinée par les rotors pour générer un travail de portance au moment de l'atterrissage par exemple.

En outre, un dispositif d'optimisation de puissance visant à déconnecter un arbre d'entraînement peut s'avérer relativement simple, et peut donc engendrer un surcroît massique léger.

Selon un autre aspect, le dispositif d'optimisation de puissance peut être un équipement optionnel.

Le giravion peut de plus comporter une ou plusieurs des caractéristiques qui suivent.

Selon un aspect, le giravion pouvant comprendre un système de lubrification pour lubrifier ladite boîte de transmission de puissance, ledit système de lubrification pouvant comprendre un radiateur et un ventilateur, ledit au moins un accessoire peut comporter ledit ventilateur.

Le giravion peut comprendre une veine d'air débouchant sur l'extérieur et alimentant en air frais un ventilateur et un compartiment mécanique logeant la boîte de transmission de puissance.

La déconnexion du ventilateur mécanique lié au refroidissement de la boîte de transmission de puissance s'avère intéressante dans la mesure où ce ventilateur peut consommer une puissance relativement importante de l'ordre 40 kW.

De plus, sur un aéronef multimoteur et suite à une panne rendant inutilisable un moteur, le pilote peut choisir de poser le giravion ou de poursuive le vol dans un mode de vol dit « économique ». Lorsque le pilote choisit de continuer le vol, le pilote rejoint des conditions de vol dans lesquelles les rotors consomment une puissance minimisée. Un tel point de fonctionnement peut correspondre à un vol réalisé à une vitesse d'avancement intermédiaire, par exemple de l'ordre de 80 à 100 nœuds (soit entre sensiblement 148 et 185 kilomètres par heure). Cette vitesse d'avancement intermédiaire peut être suffisante pour générer un flux d'air dans la veine d'air capable de dissiper la puissance thermique relativement modérée émise par la boîte de transmission de puissance dans cette phase. L'arrêt du ventilateur par déconnexion de son arbre d'entraînement dans ces conditions peut donc avoir une faible incidence voire pas d'incidence sur le fonctionnement de la boîte de transmission de puissance pendant un vol dans un mode économique.

De manière complémentaire ou alternative, d'autres accessoires non sustentateurs peuvent être déconnectés.

Ainsi, le giravion pouvant comporter un réseau électrique muni d'au moins un alternateur et d'au moins une batterie, ledit au moins un accessoire peut comporter cet alternateur.

Les cœurs électriques d'un giravion coopèrent alors avec une batterie pouvant fournir de l'énergie électrique pendant un temps prédéterminé. Dès lors, un alternateur peut éventuellement être rendu inopérant, notamment si ledit temps prédéterminé est suffisant pour finir le vol.

Selon une réalisation, ledit dispositif de déconnexion peut être un dispositif de déconnexion par rupture dudit arbre d'entraînement.

Le dispositif d'optimisation de puissance a alors pour fonction de casser un arbre d'entraînement d'une liaison mécanique. Casser volontairement un organe d'un giravion est contre nature. Néanmoins, lorsque les régimes d'urgence sont mis en œuvre sur un giravion multimoteur, l'installation motrice ainsi que la boite de transmission principale et les arbres de transmission de puissance vers les accessoires doivent être révisés. Dès lors, le remplacement de l'arbre d'entraînement volontairement cassé est envisageable.

Par exemple, l'arbre d'entraînement peut comprendre une zone fusible rompant sous l'action dudit dispositif de déconnexion.

Par exemple, l'arbre d'entraînement comporte une section amincie au regard des autres sections de cet arbre d'entraînement.

Une zone fusible est parfois disposée sur un arbre d'entraînement entre une source de puissance et un consommateur de puissance. La zone fusible est étudiée pour rompre en cas de blocage du consommateur de puissance afin de préserver l'intégrité physique de la source de puissance.

L'invention peut prévoir une zone fusible non pas dans ce but mais pour déconnecter l'accessoire afin de maximiser la puissance pouvant être distribuée à un consommateur de puissance privilégié, en l'occurrence les rotors.

Selon un aspect, le dispositif de déconnexion peut comporter un organe de rupture qui exerce une action mécanique sur ledit arbre d'entraînement.

L'organe de rupture est un organe physique pouvant être en contact contre l'arbre d'entraînement pour générer sa rupture. Par exemple, l'organe mécanique peut générer un choc radial sur l'arbre d'entraînement pour faire rompre cet arbre d'entraînement. De manière alternative ou complémentaire, l'organe de rupture peut faire rompre l'arbre d'entraînement par usinage par tournage, en pénétrant dans l'épaisseur de l'arbre d'entraînement durant la rotation de cet arbre d'entraînement. De manière alternative ou complémentaire, l'organe de rupture peut tendre à freiner un tronçon de l'arbre d'entraînement pour générer un couple important sur cet arbre d'entraînement afin de faire rompre une zone fusible. De manière alternative ou complémentaire, l'organe de rupture peut tendre à échauffer l'arbre d'entraînement pour engendrer sa rupture.

En présence d'une zone fusible sur l'arbre d'entraînement, l'action mécanique peut être exercée sur cette zone fusible, ou à côté de la zone fusible. Par exemple, un organe de rupture peut comporter une tête générant un choc radial sur la zone fusible.

Selon un aspect, le dispositif de déconnexion peut comporter un outil de coupe et un actionneur, ledit actionneur déplaçant sur requête ledit outil de coupe d'une position neutre vers une position de rupture, ledit outil de coupe n'étant pas en contact avec l'arbre d'entraînement dans la position neutre et étant en contact avec l'arbre d'entraînement dans la position de rupture.

Le terme « outil de coupe » désigne un outil apte à casser l'arbre d'entraînement par une action mécanique, et pas nécessairement par une coupe.

L'outil de coupe peut être mis en mouvement à cet effet par un actionneur axial déplaçant axialement cet outil de coupe, par exemple radialement au regard de l'arbre d'entraînement. De manière alternative ou complémentaire, l'outil de coupe peut être mis en mouvement à cet effet par un actionneur rotatif.

Le cas échéant, l'outil de coupe est déplacé contre une zone fusible.

Dès lors, un actionneur est placé en vis-à-vis de l'arbre d'entraînement, éventuellement en vis-à-vis d'une zone fusible. Cet actionneur est relié à un outil de coupe, par exemple du type plaquette d'usinage. Cet actionneur est activé lors de la détection d'une panne rendant inutilisable un moteur, par exemple en étant interfacé avec les calculateurs moteurs. Dès lors, l'actionneur déplace l'outil de coupe contre l'arbre d'entraînement pour provoquer une rupture de l'arbre d'entraînement, par exemple de manière quasi instantanée au niveau d'une zone fusible. Plus aucune puissance mécanique n'est alors consommée par l'accessoire. La puissance mécanique économisée peut être réaffectée aux rotors par la boîte de transmission de puissance pour améliorer la sustentation du giravion.

Selon un aspect, le dispositif de déconnexion peut comporter un organe ressort tendant à déplacer ledit outil de coupe dans la position de rupture, ledit organe ressort étant comprimé dans la position neutre, ledit actionneur comprenant un frein apte à bloquer ledit outil de coupe dans la position neutre et à débloquer ledit outil de coupe sur requête pour permettre son déplacement dans la position de rupture.

Le dispositif de déconnexion prend alors la forme d'un système à ressort précontraint muni d'un actionneur qui agit sur le frein pour relâcher l'outil de coupe au moment d'une panne rendant inutilisable un moteur.

Le dispositif de déconnexion s'avère alors simple et potentiellement léger.

Le frein peut exercer un effort sur l'outil de coupe. Par exemple, le frein peut prendre la forme d'un doigt, d'une goupille, d'une butée...

Eventuellement, l'actionneur peut comporter un vérin, ce vérin pouvant porter l'outil de coupe ou un frein.

Un tel actionneur peut prendre la forme d'un vérin hydraulique, pneumatique, électrique...

Un dispositif motoréducteur associé à une crémaillère est aussi envisageable pour constituer un outil de déconnexion.

Un système à déclenchement pyrotechnique est aussi envisageable.

Selon un aspect, ledit arbre d'entraînement étant destiné à être rompu en deux tronçons, le giravion comporte au moins un guide pour guider au moins un dit tronçon suite à une rupture dudit arbre d'entraînement.

Après rupture, le tronçon de l'arbre d'entraînement relié à la boîte de transmission de puissance continue de tourner sur lui-même. La vitesse de rotation du tronçon relié à l'accessoire ralentit jusqu'à l'arrêt complet de sa rotation. Des guides peuvent être utilisés pour assurer une fonction anti-fouettement afin de maintenir en position les tronçons de l'arbre d'entraînement.

L'arbre d'entraînement pouvant être creux, un tel guide peut être disposé dans les tronçons en question. Par exemple, la boîte de transmission de puissance peut comprendre une tige de sortie reliée à un arbre d'entraînement d'un accessoire par une bride. La bride peut comprendre un tube traversant au moins partiellement l'arbre d'entraînement, des paliers pouvant être disposés entre le tube et l'arbre d'entraînement.

Un tel guide peut aussi prendre la forme d'un palier qui entoure au moins un tronçon.

Selon une autre réalisation, le dispositif de déconnexion peut comporter une tige de liaison munie de cannelures de liaison, lesdites cannelures de liaison étant en prise lorsque ledit au moins un moteur est utilisable avec des cannelures amont mises en mouvement par la boîte de transmission de puissance et des cannelures aval dudit arbre d'entraînement, ledit dispositif de déconnexion comprenant un actionneur relié à la tige de liaison.

Cet actionneur permet de déplacer les cannelures de liaison pour les désolidariser des cannelures amont et/ou aval.

Selon un autre aspect, ledit au moins un moteur pouvant être contrôlé par au moins un calculateur moteur, le calculateur moteur pouvant comprendre un sous-ensemble pour déterminer la présence d'une panne rendant inutilisable ledit au moins un moteur, ledit calculateur de commande peut :
- soit comprendre ledit au moins un calculateur moteur, ledit au moins un calculateur moteur étant relié au dispositif de déconnexion pour émettre un ordre de déconnexion dudit arbre d'entraînement transmis au dispositif de déconnexion quand une dite panne est détectée,
- soit être indépendant dudit calculateur moteur, ledit calculateur de commande étant relié au dit au moins un calculateur moteur et au dispositif de déconnexion pour recevoir un ordre de commande dudit au moins un calculateur moteur et pour générer un ordre de déconnexion dudit arbre d'entraînement vers le dispositif de déconnexion quand une dite panne est détectée.

Selon une variante, le calculateur moteur d'un moteur possède un premier sous-ensemble pour détecter une panne rendant inutilisable un moteur, et un deuxième sous-ensemble qui commande le dispositif de déconnexion en présence d'une telle panne.

Selon une autre variante, le calculateur moteur d'un moteur possède ledit premier sous-ensemble pour détecter une panne rendant inutilisable un moteur. Ce premier sous-ensemble transmet alors un signal au calculateur de commande pour l'informer de la présence d'une telle panne, le calculateur de commande commandant alors le dispositif de déconnexion.

Outre un giravion, l'invention vise un procédé pour optimiser une puissance distribuée à un dit rotor par la boîte de transmission de puissance au sein d'un tel giravion. Ce procédé comporte les étapes suivantes :
- surveillance du fonctionnement dudit au moins un moteur avec au moins un calculateur moteur,
- déconnexion volontaire et commandée dudit arbre d'entraînement avec ledit dispositif de déconnexion lorsqu'au ledit au moins un moteur est inutilisable.

L'invention et ses avantages apparaîtront avec plus de détails dans le cadre de la description qui suit avec des exemples donnés à titre illustratif en référence aux figures annexées qui représentent :
- les figures 1 à 5, des schémas illustrant un giravion selon l'invention muni d'un dispositif de déconnexion par rupture et le procédé appliqué,
- les figures 6 et 7, des schémas illustrant des dispositifs de déconnexion par rupture, et
- la figure 8, un schéma illustrant un dispositif de déconnexion par déplacement.

Les éléments présents dans plusieurs figures distinctes sont affectés d'une seule et même référence.

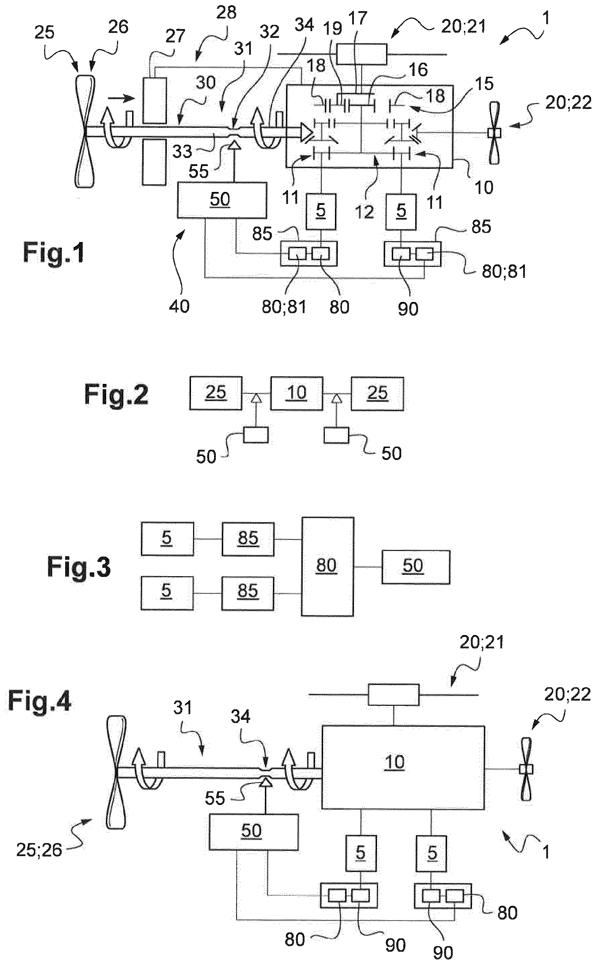

La figure 1 présente un giravion 1 selon l'invention.

Le giravion 1 comprend une installation motrice munie d'au moins un moteur 5. Par exemple, chaque moteur 5 est un turbomoteur.

En outre, l'installation motrice comprend au moins un calculateur moteur 85, et éventuellement au moins un calculateur moteur 85 par moteur 5. Un tel calculateur moteur 85 permet de gérer le moteur qu'il contrôle, et par exemple le débit de carburant à fournir à ce moteur. Un tel calculateur moteur peut être du type connu sous l'acronyme « EECU » correspondant à l'expression anglaise « Engine Electronic Control Unit », ou plus simplement sous l'acronyme « ECU » correspondant à l'expression anglaise « Engine Control Unit ». Un calculateur moteur peut comprendre par exemple au moins un processeur, au moins un circuit intégré, au moins un système programmable, au moins un circuit logique, ces exemples ne limitant pas la portée donnée à l'expression « calculateur moteur ».

Chaque calculateur moteur 85 peut de manière classique déterminer si un moteur 5 est en panne et inutilisable. Par exemple, chaque calculateur moteur 85 peut déterminer que le moteur 5 contrôlé est inutilisable au travers de la surveillance de paramètres moteurs. Chaque calculateur moteur 85 peut être relié à cet effet à au moins un capteur de température, au moins un capteur de vitesse de rotation, au moins un capteur de couple.. par exemple, la vitesse de rotation Ng d'un générateur de gaz, la température des gaz T4 ou T45 dans le moteur et le couple moteur Tq sont mesurés.

Sur un appareil multimoteur, les calculateurs moteurs peuvent de plus communiquer entre eux.

Les procédés de l'art antérieur peuvent être appliqués.

En résumé, le giravion comprend au moins un moteur 5 voire au moins deux moteurs contrôlés chacun par au moins un calculateur moteur 85, chaque calculateur moteur 85 comprenant un premier sous-ensemble 90 apte à déterminer si un moteur est en panne et inutilisable.

En outre, le giravion 1 comprend une boîte de transmission de puissance 10 interposée cinématiquement entre au moins un rotor 20 et le ou les moteurs 5.

Ainsi, chaque moteur 5 met en mouvement la boîte de transmission de puissance 10, cette boîte de transmission de puissance 10 mettant en mouvement au moins un rotor 20. Chaque rotor 20 est un organe aérodynamique participant au moins à la sustentation et/ou à la propulsion ou encore au contrôle du mouvement en lacet du giravion 1. Par exemple, le giravion est un hélicoptère comprenant une boîte de transmission de puissance 10 mettant en mouvement un rotor principal 21 de sustentation et de propulsion ainsi qu'un rotor arrière 22 de contrôle du mouvement en lacet de l'hélicoptère.

Selon l'exemple donné à titre illustratif, chaque moteur 5 met en mouvement une roue 12 via un pignon 11. La roue 12 peut entraîner le rotor arrière via divers engrenages voire une boîte de transmission arrière. De plus, la roue 12 peut entraîner le rotor principal via au moins un étage épicycloïdal d'engrenages 15. Un tel étage épicycloïdal d'engrenages 15 peut comprendre une roue planétaire 16, des roues satellites 19, un porte-satellites 17 et une couronne 18. Ces organes sont connus de l'homme du métier.

En outre, le giravion 1 comprend au moins un accessoire 25 qui n'est pas un organe aérodynamique. Dès lors, chaque accessoire 25 est lié mécaniquement à la boîte de transmission de puissance 10 par une liaison mécanique 30. Une telle liaison mécanique 30 comprend au moins un arbre d'entraînement 31, et éventuellement des organes de liaison de type brides ou équivalents. Cet arbre d'entraînement 31 peut pénétrer dans l'accessoire 25 et/ou la boîte de transmission de puissance 10,

En outre, l'arbre d'entraînement 31 peut comprendre deux tronçons 33, 34 reliés par une zone fusible 32.

Selon l'exemple de la figure 1, le giravion 1 peut comprendre un système de lubrification 28 muni d'un radiateur 27 et d'un ventilateur 26. Un accessoire 25 peut alors prendre la forme de ce ventilateur 26.

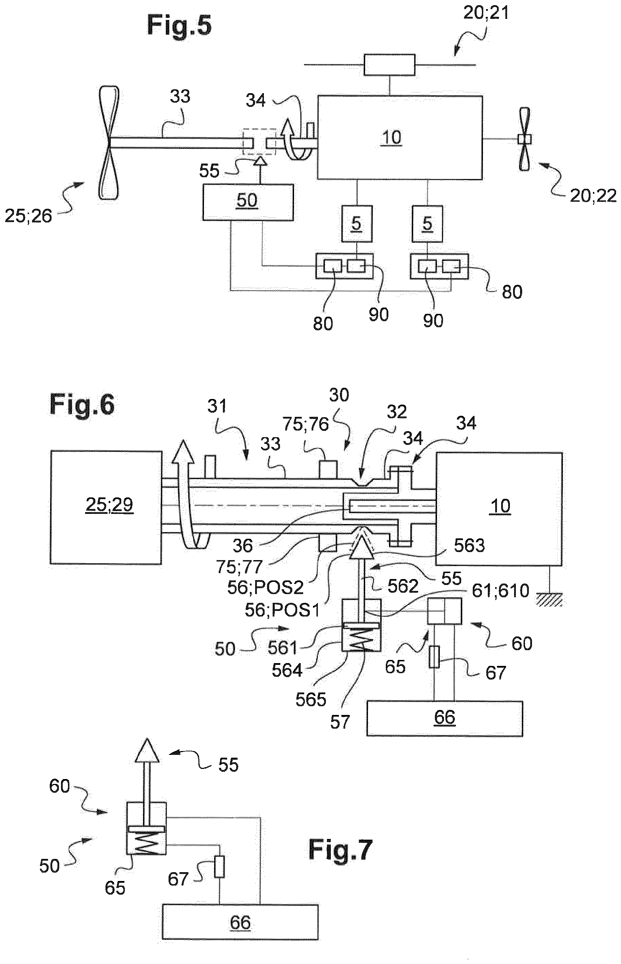

Selon l'exemple de la figure 6 décrit par la suite, un accessoire 25 peut prendre la forme d'un alternateur 29 d'un réseau électrique comprenant au moins une batterie.

Indépendamment de la nature de l'accessoire 25 relié à la boîte de transmission de puissance par un arbre d'entraînement 31 et de la réalisation, le giravion 1 comporte un dispositif d'optimisation de puissance 40.

Ce dispositif d'optimisation de puissance 40 comprend au moins un dispositif de déconnexion 50 apte à déconnecter un arbre d'entraînement 31 sur requête d'une entité dénommée « calculateur de commande 80 ».

Selon l'exemple de la figure 2, plusieurs dispositifs de déconnexion 50 peuvent être utilisés pour isoler plusieurs accessoires.

Par ailleurs, et en référence à la figure 1, le calculateur de commande 80 peut comprendre plusieurs unités. Ainsi, chaque calculateur moteur 85 présente selon cette variante un deuxième sous-ensemble 81 formant une unité du calculateur de commande. Ce deuxième sous-ensemble 81 peut prendre la forme d'un segment de code, d'au moins un processeur, d'au moins un circuit intégré, d'au moins un système programmable, d'au moins un circuit logique, ces exemples ne limitant pas la portée donnée à l'expression « deuxième sous-ensemble ».

Selon cette variante, un premier sous-ensemble 90 d'un calculateur moteur peut détecter une panne rendant un moteur inutilisable. Un deuxième sous-ensemble 81 de ce calculateur moteur peut alors transmettre un ordre de déconnexion d'un arbre d'entraînement 31 à chaque dispositif de déconnexion 50 quand une dite panne est détectée. Un tel ordre peut prendre la forme d'un signal analogique ou numérique par exemple.

Selon la variante de la figure 3, le calculateur de commande 80 est indépendant de chaque calculateur moteur 85.

Dès lors, le calculateur de commande 80 est relié à chaque calculateur moteur 85 et à chaque dispositif de déconnexion 50. Chaque calculateur moteur peut alors transmettre au calculateur de commande un ordre de commande, par exemple sous la forme d'un signal analogique ou numérique, quand une dite panne est détectée. Suite à la réception de cet ordre de commande, le calculateur de commande génère un ordre de déconnexion, par exemple sous la forme d'un signal analogique ou numérique. L'ordre de déconnexion est transmis à chaque dispositif de déconnexion 50 pour obtenir la déconnexion des arbres correspondants.

Le calculateur de commande 80 peut alors comprendre par exemple au moins un processeur, au moins un circuit intégré, au moins un système programmable, au moins un circuit logique, ces exemples ne limitant pas la portée donnée à l'expression « calculateur de commande ».

Indépendamment de la réalisation du calculateur de commande et en référence à la figure 1, aucun dispositif de déconnexion 50 n'interfère avec le fonctionnement des accessoires tant que le ou les moteurs fonctionnent normalement. Le procédé appliqué prévoit néanmoins de vérifier le fonctionnement des moteurs 5 avec chaque calculateur moteur 85.

Par contre et en référence à la figure 4, lorsqu'une panne est détectée et en particulier une panne induisant l'arrêt d'un moteur concerné, voire le fonctionnement des autres moteurs dans un régime d'urgence sur un aéronef multimoteur, le calculateur de commande active les dispositifs de déconnexion 50. Dans un mode d'entraînement, les dispositifs de déconnexion peuvent être inhibés par exemple par la commande permettant d'enclencher le mode d'entraînement.

En référence à la figure 5, chaque dispositif de déconnexion 50 casse ainsi la liaison mécanique associée. Eventuellement, chaque zone fusible 32 rompt sous l'action des dispositifs de déconnexion 50. L'arbre d'entraînement 31 présente alors deux tronçons 33, 34 indépendants l'un de l'autre.

Par suite, l'accessoire correspondant ne prélève plus de puissance sur la boîte de transmission de puissance. La puissance disponible pour entraîner les rotors 20 est alors maximisée.

Selon la figure 6, le giravion 1 peut comporter au moins un guide 75 pour guider au moins un tronçon 33, 34 suite à une rupture dudit arbre d'entraînement 31.

Par exemple, l'arbre d'entraînement 31 peut être fixé à une bride 35 solidaire de la boîte de transmission de puissance 10. La bride 35 peut comprendre un tube 36 traversant au moins partiellement l'arbre d'entraînement 31. Dès lors, des paliers 77 servant de guide 75 peuvent être interposés entre le tube 36 et l'arbre d'entraînement 31.

Des paliers 76 d'un tel guide peuvent aussi entourer au moins un tronçon.

Par ailleurs et indépendamment de cet aspect, la figure 6 illustre un dispositif de déconnexion 50 par rupture.

Un dispositif de déconnexion 50 peut être équipé d'un organe de rupture 55. Cet organe de rupture 55 exerce une action mécanique sur l'arbre d'entraînement 31 pour entraîner sa rupture.

Un tel organe de rupture peut comprendre un outil de coupe 56 muni d'une tête apte à exercer un effort sur l'arbre d'entraînement 31, et éventuellement sur sa zone fusible. Par exemple, l'outil de coupe présente un couteau ou équivalant.

De plus, le dispositif de déconnexion 50 comporte un actionneur 60 agissant directement ou indirectement sur l'outil de coupe 56. L'actionneur 60 a pour fonction de permettre le déplacement de l'outil de coupe 56 sur ordre du calculateur de commande. Ainsi, l'actionneur 60 induit le déplacement de l'outil de coupe d'une position neutre POS1 représentée en traits pleins vers une position de rupture POS2 représentée en traits pointillés. L'outil de coupe 56 n'est pas en contact avec l'arbre d'entraînement 31 dans la position neutre POS1. Par contre, l'outil de coupe est en contact avec l'arbre d'entraînement 31 dans la position de rupture POS2, par exemple en étant accolé à la zone fusible.

L'actionneur 60 peut comporter un vérin 65 hydraulique, pneumatique, électrique...

Selon l'exemple de la figure 6, le dispositif de déconnexion 50 comporte un organe ressort 57. Cet organe ressort 57 exerce un effort tendant à déplacer l'outil de coupe 56 dans la position de rupture POS2. Cet organe ressort 57 est précontraint pour être comprimé lorsque l'outil de coupe est maintenu dans la position neutre.

A cet effet, le dispositif de déconnexion comporte un frein 61 apte à bloquer l'outil de coupe 56 dans la position neutre POS1 et à débloquer l'outil de coupe 56 sur requête pour permettre son déplacement dans la position de rupture POS2. Un actionneur peut agir sur le frein pour débloquer l'outil de coupe.

Selon l'exemple de la figure 6, l'outil de coupe 56 comporte un piston 561 disposé dans un carter 564. Ce piston 561 porte une tige 562 surmontée d'un couteau 563. L'organe ressort 57 présente alors un ressort ou équivalent en contact avec un fond 565 du carter 564 et le piston 561 pour tendre à pousser le piston 561 afin de faire translater le couteau 563 vers la liaison mécanique en l'éloignant du carter 564. Le frein 61 peut alors posséder une goupille 610 ou équivalent mobile par rapport à la tige 562 et apte à être engagée dans la tige 562 pour la bloquer. Selon l'exemple schématisé, la goupille 610 traverse le carter 564 pour être figée dans la tige 562. L'actionneur 60 peut alors prendre la forme d'un vérin 65 apte à faire translater la goupille 610 en dehors de la tige 562. La figure 6 illustre un vérin hydraulique relié à un circuit hydraulique par une vanne 67 commandée par le calculateur de commande. Un vérin électrique ou pneumatique peut par exemple être utilisé.

Selon la figure 7, l'outil de coupe peut être porté par un vérin 65. La figure 7 illustre un vérin hydraulique du type précédemment décrit mais tout type de vérin peut être utilisé.

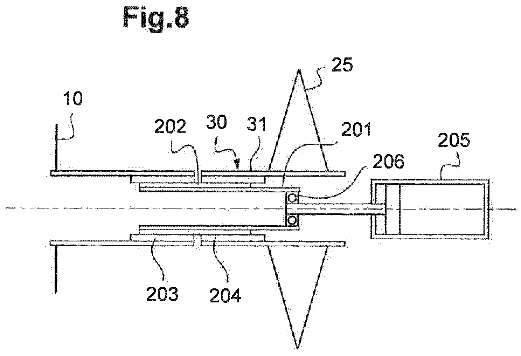

Selon la figure 8, la déconnexion d'un accessoire est non pas obtenue par rupture d'un arbre d'entraînement 31 mais par une déconnexion mécanique.

Dès lors, le dispositif de déconnexion peut comporter une tige de liaison 201 munie de cannelures de liaison 202. Tant que tous les moteurs sont est utilisables, les cannelures de liaison 202 sont en prise avec des cannelures amont 203 mises en mouvement par la boîte de transmission de puissance 10. De plus, les cannelures de liaison 202 sont aussi en prise avec des cannelures aval 204 de l'arbre d'entraînement 31.

Dès lors, le dispositif de déconnexion comprend un actionneur 205 relié à la tige de liaison pour déplacer en translation la tige de liaison afin de désolidariser en rotation les cannelures de liaison 204 avec les cannelures amont 203 et/ou les cannelures aval. Par exemple, l'actionneur 205 est un actionneur linéaire. De plus, l'actionneur 205 peut être relié à la tige de liaison 201 par un organe de roulement 206 qui confère uniquement un degré de liberté en rotation à la tige de liaison 201 par rapport à l'actionneur 205.

Cet actionneur 205 est alors commandé par le calculateur de commande.

Par ailleurs, des guides du type précédemment décrits peuvent être utilisés.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Giravion (1) muni d'au moins un moteur (5), ledit giravion (1) comprenant une boîte de transmission de puissance (10) mise en mouvement par ledit au moins un moteur (5), ledit giravion (1) comprenant au moins un rotor (20) mis en rotation par ladite boîte de transmission de puissance (10), ledit rotor (20) étant un organe aérodynamique participant au moins à la sustentation ou à la propulsion ou au contrôle du mouvement en lacet du giravion (1), ledit giravion (1) comprenant au moins un accessoire (25) qui n'est pas un dit organe aérodynamique, ledit giravion (1) comprenant une liaison mécanique (30) liant mécaniquement ladite boîte de transmission de puissance (10) et ledit au moins un accessoire (25), ladite boîte de transmission de puissance (10) mettant en mouvement ledit accessoire (25) via ladite liaison mécanique (30), ladite liaison mécanique (30) comprenant au moins un arbre d'entraînement (31) connecté à la boîte de transmission de puissance (10),
**caractérisé en ce que** ledit giravion (1) comporte un dispositif d'optimisation de puissance (40), ledit dispositif d'optimisation de puissance (40) comprenant un dispositif de déconnexion (50) par déconnexion dudit arbre d'entraînement (31) de la boîte de transmission de puissance (10), ledit dispositif de déconnexion (50) étant commandé par un calculateur de commande (80), ledit calculateur de commande (80) étant configuré pour activer ledit dispositif de déconnexion (50) pour déconnecter ledit arbre d'entraînement (31) de la boîte de transmission de puissance (10) lorsque ledit au moins un moteur (5) est inutilisable.

2. Giravion selon la revendication 1,
**caractérisé en ce que** ledit giravion (1) comprenant un système de lubrification (28) pour lubrifier ladite boîte de transmission de puissance (10), ledit système de lubrification (28) comprenant un radiateur (27) et un ventilateur (26), ledit au moins un accessoire comporte ledit ventilateur (26).

3. Giravion selon l'une quelconque des revendications 1 à 2,
**caractérisé en ce que** ledit giravion (1) comporte un réseau électrique muni d'au moins un alternateur (29) et d'au moins une batterie, ledit au moins un accessoire comportant ledit alternateur (29).

4. Giravion selon l'une quelconque des revendications 1 à 3,
**caractérisé en ce que** ledit dispositif de déconnexion (50) est un dispositif de déconnexion par rupture dudit arbre d'entraînement (31).

5. Giravion selon la revendication 4,
**caractérisé en ce que** ledit arbre d'entraînement (31) comprend une zone fusible (32) rompant sous l'action dudit dispositif de déconnexion (50).

6. Giravion selon l'une quelconque des revendications 4 à 5,
**caractérisé en ce que** ledit dispositif de déconnexion (50) comporte un organe de rupture (55) qui exerce une action mécanique sur ledit arbre d'entraînement (31).

7. Giravion selon l'une quelconque des revendications 4 à 6,
**caractérisé en ce que** ledit dispositif de déconnexion (50) comporte un outil de coupe (56) et un actionneur (60), ledit actionneur (60) déplaçant sur requête ledit outil de coupe (56) d'une position neutre (POS1) vers une position de rupture (POS2), ledit outil de coupe (56) n'étant pas en contact avec l'arbre d'entraînement (31) dans la position neutre (POS1) et étant en contact avec l'arbre d'entraînement (31) dans la position de rupture (POS2).

8. Giravion selon la revendication 7,
**caractérisé en ce que** ledit dispositif de déconnexion (50) comporte un organe ressort (57) tendant à déplacer ledit outil de coupe (56) dans la position de rupture (POS2), ledit organe ressort (57) étant comprimé dans la position neutre (POS1), ledit actionneur (60) comprenant un frein (61) apte à bloquer ledit outil de coupe (56) dans la position neutre (POS1) et à débloquer ledit outil de coupe (56) sur requête pour permettre son déplacement dans la position de rupture (POS2).

9. Giravion selon l'une quelconque des revendications 4 à 8,
**caractérisé en ce que** ledit actionneur (60) comporte un vérin (65).

10. Giravion selon l'une quelconque des revendications 4 à 9,
**caractérisé en ce que**, ledit arbre d'entraînement (31) étant destiné à être rompu en deux tronçons (33, 34), ledit giravion (1) comporte au moins un guide (75) pour guider au moins un dit tronçon (33, 34) suite à une rupture dudit arbre d'entraînement (31).

11. Giravion selon l'une quelconque des revendications 1 à 3,
**caractérisé en ce que** ledit dispositif de déconnexion comporte une tige de liaison munie de cannelures de liaison, lesdites cannelures de liaison étant en prise lorsque ledit au moins un moteur est utilisable avec des cannelures amont mises en mouvement par la boîte de transmission de puissance et des cannelures aval dudit arbre d'entraînement, ledit dispositif de déconnexion comprenant un actionneur relié à la tige de liaison.

12. Giravion selon l'une quelconque des revendications 1 à 11,
**caractérisé en ce que** ledit au moins un moteur (5) étant contrôlé par au moins un calculateur moteur (85), le calculateur moteur (85) comprenant un sous-ensemble (90) pour déterminer la présence d'une panne rendant inutilisable ledit au moins un moteur (5), ledit calculateur de commande (80) peut :
- soit comprendre ledit au moins un calculateur moteur (85), ledit au moins un calculateur moteur (85) étant relié au dispositif de déconnexion (50) pour émettre un ordre de déconnexion dudit arbre d'entraînement (31) transmis au dispositif de déconnexion (50),
- soit être indépendant dudit calculateur moteur (85), ledit calculateur de commande (80) étant relié au dit au moins un calculateur moteur (85) et au dispositif de déconnexion (50) pour recevoir un ordre de commande dudit au moins un calculateur moteur et pour générer un ordre de déconnexion dudit arbre d'entraînement (31) vers le dispositif de déconnexion (50).

13. Procédé pour optimiser une puissance distribuée à un dit rotor (20) par ladite boîte de transmission de puissance (10) au sein d'un giravion (1) selon l'une quelconque des revendications 1 à 12,
**caractérisé en ce que** ledit procédé comporte les étapes suivantes :
- surveillance du fonctionnement dudit au moins un moteur (5) avec au moins un calculateur moteur (85),
- déconnexion volontaire et commandée dudit arbre d'entraînement (31) avec ledit dispositif de déconnexion (50) lorsque ledit moins un moteur (5) est inutilisable.

## Patentansprüche

1. Drehflügelflugzeug (1) mit mindestens einem Motor (5), wobei das Drehflügelflugzeug (1) ein Leistungsgetriebe (10) umfasst, das durch den mindestens einen Motor (5) in Bewegung gesetzt wird, wobei das Drehflügelflugzeug (1) mindestens einen Rotor (20) umfasst, der durch das Leistungsgetriebe (10) in Drehung versetzt wird, wobei der Rotor (20) ein aerodynamisches Element ist, das mindestens am Schweben oder Antreiben oder Steuern der Gierbewegung des Drehflügelflugzeugs (1) beteiligt ist,
wobei das Drehflügelflugzeug (1) mindestens ein Zubehör (25) umfasst, das nicht das aerodynamische Element ist, wobei das Drehflügelflugzeug (1) eine mechanische Verbindung (30) umfasst, die das Leistungsgetriebe (10) und das mindestens eine Zubehör (25) mechanisch verbindet, wobei das Leistungsgetriebe (10) das Zubehör (25) über die mechanische Verbindung (30) antreibt,
wobei die mechanische Verbindung (30) mindestens eine Antriebswelle (31) umfasst, die mit dem Leistungsgetriebe (10) verbunden ist,
**dadurch gekennzeichnet, dass** das Drehflügelflugzeug (1) eine Leistungsoptimierungsvorrichtung (40) aufweist, wobei die Leistungsoptimierungsvorrichtung (40) eine Trennvorrichtung (50) durch Trennen der Antriebswelle (31) von dem Leistungsgetriebe (10) umfasst, wobei die Trennvorrichtung (50) durch einen Steuerrechner (80) gesteuert ist, wobei der Steuerrechner (80) konfiguriert ist, um die Trennvorrichtung (50) zu aktivieren, um die Antriebswelle (31) von dem Leistungsgetriebe (10) zu trennen, wenn der mindestens eine Motor (5) unbrauchbar ist.

2. Drehflügelflugzeug nach Anspruch 1,
**dadurch gekennzeichnet, dass** das Drehflügelflugzeug (1) ein Schmiersystem (28) zum Schmieren des Leistungsgetriebes (10) umfasst, wobei das Schmiersystem (28) einen Kühler (27) und einen Lüfter (26) umfasst, und wobei das mindestens eine Zubehör den Lüfter (26) umfasst.

3. Drehflügelflugzeug nach einem der Ansprüche 1 bis 2,
**dadurch gekennzeichnet, dass** das Drehflügelflugzeug (1) ein Stromnetz aufweist, das mit mindestens einer Lichtmaschine (29) und mindestens einer Batterie versehen ist, wobei das mindestens eine Zubehör die Lichtmaschine (29) umfasst.

4. Drehflügelflugzeug nach einem der Ansprüche 1 bis 3,
**dadurch gekennzeichnet, dass** die Trennvorrichtung (50) eine Trennvorrichtung durch Bruch der Antriebswelle (31) ist.

5. Drehflügelflugzeug nach Anspruch 4,
**dadurch gekennzeichnet, dass** die Antriebswelle (31) eine Sicherungszone (32) umfasst, die unter der Wirkung der Trennvorrichtung (50) bricht.

6. Drehflügelflugzeug nach einem der Ansprüche 4 bis 5,
**dadurch gekennzeichnet, dass** die Trennvorrichtung (50) ein Unterbrechungselement (55) aufweist, das eine mechanische Wirkung auf die Antriebswelle (31) ausübt.

7. Drehflügelflugzeug nach einem der Ansprüche 4 bis 6,
**dadurch gekennzeichnet, dass** die Trennvorrichtung (50) ein Schneidwerkzeug (56) und ein Stellglied (60) aufweist, wobei das Stellglied (60) das Schneidwerkzeug (56) auf Anforderung aus einer Neutralstellung (POS1) in eine Unterbrechungsstellung (POS2) bewegt, wobei das Schneidwerkzeug (56) in der Neutralstellung (POS1) nicht mit der Antriebswelle (31) in Kontakt ist und in der Unterbrechungsstellung (POS2) mit der Antriebswelle (31) in Kontakt ist.

8. Drehflügelflugzeug nach Anspruch 7,
**dadurch gekennzeichnet, dass** die Trennvorrichtung (50) ein Federelement (57) aufweist, welches das Schneidwerkzeug (56) in die Unterbrechungsstellung (POS2) beaufschlagt, wobei das Federelement (57) in der Neutralstellung (POS1) zusammengedrückt ist, wobei das Stellglied (60) eine Bremse (61) umfasst, die eingerichtet ist, das Schneidwerkzeug (56) in der Neutralstellung (POS1) zu blockieren und das Schneidwerkzeug (56) auf Anforderung freizugeben, um dessen Bewegung in die Unterbrechungsstellung (POS2) zu ermöglichen.

9. Drehflügelflugzeug nach einem der Ansprüche 4 bis 8,
**dadurch gekennzeichnet, dass** das Stellglied (60) einen Zylinder (65) umfasst.

10. Drehflügelflugzeug nach einem der Ansprüche 4 bis 9,
**dadurch gekennzeichnet, dass** die Antriebswelle (31) vorgesehen ist, um in zwei Teile (33, 34) gebrochen zu werden, wobei das Drehflügelflugzeug (1) mindestens eine Führung (75) zum Führen mindestens eines der Teile (33, 34) nach einem Bruch der Antriebswelle (31) aufweist.

11. Drehflügelflugzeug nach einem der Ansprüche 1 bis 3,
**dadurch gekennzeichnet, dass** die Trennvorrichtung eine Verbindungsstange aufweist, die mit Verbindungsnuten versehen ist, wobei, wenn der mindestens eine Motor betreibbar ist, die Verbindungsnuten mit stromaufwärtigen Nuten, die durch das Leistungsgetriebe angetrieben werden, und mit stromabwärtigen Nuten der Antriebswelle in Eingriff stehen, wobei die Trennvorrichtung ein Stellglied umfasst, das mit der Verbindungsstange verbunden ist.

12. Drehflügelflugzeug nach einem der Ansprüche 1 bis 11,
**dadurch gekennzeichnet, dass** der mindestens eine Motor (5) von mindestens einem Motorrechner (85) gesteuert ist, wobei der Motorrechner (85) eine Unterbaugruppe (90) zum Bestimmen des Vorhandenseins eines den mindestens einen Motor (5) unbrauchbar machenden Fehlers umfasst, wobei der Steuerrechner (80)
- entweder den mindestens einen Motorrechner (85) umfassen kann, wobei der mindestens eine Motorrechner (85) mit der Trennvorrichtung (50) verbunden ist, um einen Befehl zum Trennen der Antriebswelle (31) auszugeben, der an die Trennvorrichtung (50) übertragen wird,
- oder unabhängig von dem Motorrechner (85) sein kann, wobei der Steuerrechner (80) mit dem mindestens einen Motorrechner (85) und mit der Trennvorrichtung (50) verbunden ist, um einen Steuerbefehl von dem mindestens einen Motorrechner zu empfangen und einen Befehl zum Trennen der Antriebswelle (31) für die Trennvorrichtung (50) zu erzeugen.

13. Verfahren zur Optimierung der in einem Drehflügelflugzeug (1) nach einem der Ansprüche 1 bis 12 durch das Leistungsgetriebe (10) auf einen Rotor (20) verteilten Leistung,
**dadurch gekennzeichnet, dass** das Verfahren die folgenden Schritte umfasst:
- Überwachen des Betriebs des mindestens einen Motors (5) mit mindestens einem Motorrechner (85),
- willkürliches und kontrolliertes Trennen der Antriebswelle (31) durch die Trennvorrichtung (50), wenn der mindestens eine Motor (5) unbrauchbar ist.

## Claims

1. Rotorcraft (1) provided with at least one motor (5), the rotorcraft (1) comprising a power transmission box (10) which is moved by the at least one motor (5), the rotorcraft (1) comprising at least one rotor (20) which is rotated by the power transmission box (10), the rotor (20) being an aerodynamic member which is involved at least in the lift or the propulsion or the control of the yaw movement of the rotorcraft (1), the rotorcraft (1) comprising at least one accessory (25) which is not an aerodynamic member, the rotorcraft (1) comprising a mechanical connection (30) which mechanically connects the power transmission box (10) and the at least one accessory (25), the power transmission box (10) moving the accessory (25) via the mechanical connection (30), the mechanical connection (30) comprising at least one drive shaft (31) which is connected to the power transmission box (10),
**characterised in that** the rotorcraft (1) comprises a power optimisation device (40), the power optimisation device (40) comprising a disconnection device (50) via disconnection of the drive shaft (31) from the power transmission box (10), the disconnection device (50) being controlled by a control processor (80), the control processor (80) being configured to activate the disconnection device (50) in order to disconnect the drive shaft (31) from the power transmission box (10) when the at least one motor (5) is unusable.

2. Rotorcraft according to claim 1,
**characterised in that** the rotorcraft (1) comprises a lubrication system (28) for lubricating the power transmission box (10), the lubrication system (28) comprising a radiator (27) and a fan (26), the at least one accessory comprising the fan (26).

3. Rotorcraft according to either claim 1 or claim 2,
**characterised in that** the rotorcraft (1) comprises an electrical network provided with at least one alternator (29) and at least one battery, the at least one accessory comprising the alternator (29).

4. Rotorcraft according to any one of claims 1 to 3,
**characterised in that** the disconnection device (50) is a device for disconnection by breaking the drive shaft (31).

5. Rotorcraft according to claim 4,
**characterised in that** the drive shaft (31) comprises a meltable zone (32) which breaks under the action of the disconnection device (50).

6. Rotorcraft according to either claim 4 or claim 5,
**characterised in that** the disconnection device (50) comprises a breaking member (55) which applies a mechanical action to the drive shaft (31).

7. Rotorcraft according to any one of claims 4 to 6,
**characterised in that** the disconnection device (50) comprises a cutting tool (56) and an actuator (60), the actuator (60) moving the cutting tool (56) on request from a neutral position (POS1) to a breaking position (POS2), the cutting tool (56) not being in contact with the drive shaft (31) in the neutral position (POS1) and being in contact with the drive shaft (31) in the breaking position (POS2).

8. Rotorcraft according to claim 7,
**characterised in that** the disconnection device (50) comprises a spring member (57) which has a tendency to move the cutting tool (56) into the breaking position (POS2), the spring member (57) being compressed in the neutral position (POS1), the actuator (60) comprising a brake (61) which is capable of blocking the cutting tool (56) in the neutral position (POS1) and unblocking the cutting tool (56) on request to enable it to be moved into the breaking position (POS2).

9. Rotorcraft according to any one of claims 4 to 8,
**characterised in that** the actuator (60) comprises a thruster (65) .

10. Rotorcraft according to any one of claims 4 to 9,
**characterised in that**, since the drive shaft (31) is intended to be broken into two portions (33, 34), the rotorcraft (1) comprises at least one guide (75) for guiding at least one portion (33, 34) following a breakage of the drive shaft (31).

11. Rotorcraft according to any one of claims 1 to 3,
**characterised in that** the disconnection device comprises a connection rod which is provided with connection grooves, the connection grooves being in engagement when the at least one motor can be used with upstream grooves which are moved by the power transmission box and downstream grooves of the drive shaft, the disconnection device comprising an actuator which is connected to the connection rod.

12. Rotorcraft according to any one of claims 1 to 11,
**characterised in that**, the at least one motor (5) being controlled by at least one motor processor (85), the motor processor (85) comprising a sub-assembly (90) in order to determine the presence of a breakdown which makes the at least one motor (5) unusable, the control processor (80) can:
- either understand the at least one motor processor (85), the at least one motor processor (85) being connected to the disconnection device (50) in order to transmit a disconnection instruction of the drive shaft (31) transmitted to the disconnection device (50),
- or be independent of the motor processor (85), the control processor (80) being connected to the at least one motor processor (85) and the disconnection device (50) in order to receive a control instruction of the at least one motor processor and to generate a disconnection instruction of the drive shaft (31) to the disconnection device (50).

13. Method for optimising a power distributed to a rotor (20) via the power transmission box (10) within a rotorcraft (1) according to any one of claims 1 to 12,
**characterised in that** the method comprises the following steps:
- monitoring the operation of the at least one engine (5) with at least one motor processor (85),
- intentional and controlled disconnection of the drive shaft (31) with the disconnection device (50) when the at least one motor (5) is unusable.
